## Europäisches Patentamt

## European Patent Office

## Office européen des brevets

(11) Veröffentlichungsnummer: **0 176 932**
**B1**

(12) **EUROPÄISCHE PATENTSCHRIFT**

(45) Veröffentlichungstag der Patentschrift:
31.01.90

(21) Anmeldenummer: 85112088.1

(22) Anmeldetag: 24.09.85

(51) Int. Cl.⁴: **G 01 N 27/82**

(54) Verfahren und Vorrichtung zur zerstörungsfreien Prüfung ferromagnetischer Körper mittels Magnetisierung.

(30) Priorität: 27.09.84 DE 3435442

(43) Veröffentlichungstag der Anmeldung:
09.04.86 Patentblatt 86/15

(45) Bekanntmachung des Hinweises auf die Patenterteilung:
31.01.90 Patentblatt 90/5

(84) Benannte Vertragsstaaten:
DE FR GB

(56) Entgegenhaltungen:
DE-A- 2 843 570
DE-A- 2 906 436
DE-A- 3 132 808
DE-B- 2 142 351
GB-A- 1 567 166

(73) Patentinhaber: **Nukem GmbH, Rodenbacher Chaussee 6 Postfach 11 00 80, D-6450 Hanau 11 (DE)**

(72) Erfinder: **Hüschelrath, Gerhard, Beethovenstrasse 6, D-8752 Laufach-Frohnhofen (DE)**

(74) Vertreter: **Stoffregen, Hans-Herbert, Dr. Dipl.-Phys. et al, Patentanwälte Strasse & Stoffregen Salzstrasse 11a Postfach 2144, D-6450 Hanau/Main 1 (DE)**

## Beschreibung

Die Erfindung bezieht sich auf ein Verfahren zur zerstörungsfreien Prüfung ferromagnetischer Körper auf Gefügestörungen mittels Magnetisierung des jeweiligen Körpers, in dem die Gefügestörungen Veränderungen des Magnetfeldverlaufs hervorrufen, die von an oder nahe an der Körperoberfläche angeordneten, ruhenden Magnetfelddetektoren erfasst werden, die längs des Umfangs des Körpers senkrecht zur Magnetisierungsrichtung angeordnet sind und deren Ausgänge in einer vorgegebenen Reihenfolge zeitmultiplex an eine Auswerteschaltung angeschlossen werden, wobei den Magnetfelddetektoren jeweils Kompensationswerte zugeordnet sind, mit denen die bei der Messung eines Körpers ohne Gefügestörungen ausgegebenen Messwerte kompensiert werden und wobei Stellungsänderungen der Magnetfelddetektoren bezüglich der Lage des Körpers festgestellt und danach die Kompensationswerte bestimmt werden und auf eine Vorrichtung zur Durchführung des Verfahrens.

Ein Verfahren und eine Vorrichtung der vorstehend beschriebenen Gattung sind bekannt (DE-A 3 132 808). Die bekannte Vorrichtung enthält mindestens zwei auf den zu prüfenden Körper in dessen Längsrichtung hintereinander angeordnete stationäre Magnetfelder. Im Raum zwischen den Polen der Magnetfelderzeuger sind die Magnetfelddetektoren in Reihen angeordnet, die sich jeweils über eine Zone erstrecken, die einem zu prüfenden Körperabschnitte senkrecht zur Verschieberichtung des Körpers entspricht. Die zeitmultiplex ansteuerbaren und auslesbaren Magnetfelddetektoren sind mit einem Kompensationsverstärker verbindbar, dem über gesonderte Eingänge Kompensationsgrössen zugeführt werden, die jeweils den einzelnen Magnetfelddetektoren zugeorndet sind. Infolge unterschiedlicher Abstände der Magnetfelddetektoren zu den Polen der Magnete sind die Ausgangssignale der Magnetfelddetektoren verschieden. Dieser Lageeinfluss der Ausgangssignale wird zur Herstellung einer hohen Messgenauigkeit durch die Kompensationsgrössen beseitigt. Die Kompensationsgrössen beziehen sich nicht nur auf die zentrische Lage des Prüflings bezüglich der Pole, sondern auch auf aussermittige Positionen. Die Verschiebung aus der zentrischen Prüflage wird gemessen. Der jeweiligen Verschiebung entsprechende Kompensationswerte werden für die Magnetfelddetektoren bestimmt.

Wenn geschweisste Rohre aus ferritischem Material geprüft werden, verursachen die Schweissnähte Streuflüsse, die bei Anlagen mit rotierenden Magnetfeldern das Fehlernachweisvermögen einschränken. Bei Schweissnähten, die sich in der Rohrlängsachse erstrecken, werden die Magnetfeldsonden in Differenzschaltung angeordnet. Die Magnetfeldsonden erstrecken sich ebenfalls in der Rohrlängsachse. Die von den Magnetfeldsonden ausgegebenen Messwerte werden wegen der Schweissnähte unterschiedlich gewichtet. Nachteilig ist hierbei, dass lange Längsfehler nur im Ein- und Auslauf zu erkennen sind.

Der Erfindung liegt die Aufgabe zugrunde, ein Verfahren der eingangs beschriebenen Gattung derart weiterzuentwickeln, dass bei Körpern mit Schweissnähten ein Fehlernachweis mit hoher Genauigkeit auch bei in Richtung der Längsachse sich erstreckenden Fehlern möglich ist.

Die Aufgabe wird erfindungsgemäss dadurch gelöst, dass zuerst die Kompensationswerte in Abhängigkeit von der Stellung des jeweiligen Magnetfelddetektors gegenüber einer Bezugslage einer Schweissnaht ermittelt werden, dass während der Messung an einem Prüfling die lateralen Veränderungen der Stellungen der Magnetfelddetektoren bei Auslenkungen der Schweissnaht aus der Bezugslage festgestellt werden, dass danach die Kompensationswerte gemäss den Veränderungen der Stellungen der Magnetfelddetektoren derart neu zugeordnet werden, dass die Messwerte und die Kompensationswerte jeweils ein Minimum ergeben, dass anschliessend die Kompensationswerte von den Messwerten vorzeichenrichtig subtrahiert werden und dass sodann die entsprechend koorigierten Messwerte mit vorab festlegbaren Schwellenwerten auf das Vorhandensein von Gefügestörungen geprüft werden.

Unter einem Minimum ist hierbei ein Wert von null oder in etwa null zu verstehen. Das Prinzip der Erfindung besteht darin, dass während der Messung eines Prüflings auf Gefügestörungen den vorgegebenen Stellungen der Magnetfelddetektoren in Bezug auf die jeweilige Schweissnaht zugeordnete Kompensationswerte von den durch die Magnetfelddetektoren jeweils ausgegebenen Messwerten vorzeichenrichtig subtrahiert werden und dass die entsprechend korrigierten Messwerte mit vorab festlegbaren Schwellenwerten auf das Vorhandensein von Gefügestörungen geprüft werden. Dabei werden fortwährend die lateralen Veränderungen der Stellungen der Magnetfelddetektoren gegenüber der Schweissnaht überwacht, und die Kompensationswerte werden gemäss der tatsächlichen Stellung des jeweiligen Magnetfelddetektors bezüglich der Schweissnaht vor der Korrektur mit den Messwerten neu zugeordnet. Mit den erfindungsgemässen Massnahmen lassen sich die von Schweissnähten hervorgerufenen Beeinträchtigungen der Messgenauigkeit besonders gut kompensieren. Die Erfindung beruht auf der Erkenntnis, dass sich ruhende Magnetfeldsensoren, deren Positionen in Bezug auf die jeweilige Schweissnaht des Körpers bei dessen Längsverschiebung nicht verändern, besonders gut für die Zuordnung von Kompensationswerten eignen. Diese Kompensationswerte sind auf die von der jeweiligen Schweissnaht an der Oberfläche senkrecht zur Längsrichtung unter Einschluss der in beiderseits an die Schweissnaht angrenzenden Körperbereichen erzeugten Streuflüsse abgestimmt. Die Streuflüsse werden beispielsweise an einem Probekörper gemessen und für die spätere Verarbeitung der auf Fehler zu untersuchenden Körper gespeichert. Es ist auch möglich, die für die Schweissnaht typischen Streuflüsse an einem fehlerfreien Abschnitt eines zu untersuchenden Körpers vorab festzustellen und hieraus die Kompensationswerte für die Unterdrückung des Einflusses der Schweissnaht auf die Messwerte, die für den Fehlernachweis ausgewertet werden, zu bestimmen. Bei dem im Anspruch 1 beschriebenen Verfahren sind Korrekturmassnahmen vorgesehen, die dafür sorgen, dass die Kompensation des Einflusses der von der Schweissnaht hervorgerufenen Streuflüsse auch dann möglich ist, wenn der Körper während seiner Verschiebung in der Längsrichtung zusätzlich laterale Bewegungen ausführt. Eine laterale Bewegung des Körpers während des Transports in Längsrichtung lässt sich insbesondere bei runden Querschnitten und bei grösseren Längen der Körper in der Praxis mit vertretbarem Aufwand für die Führung der Körper nicht ganz vermeiden. Eine derartige laterale Bewegung der Körper wird bei dem im Anspruch 1 erläuterten Verfahren durch eine entsprechend der Verschiebung veränderte Auswahl der Kompensationswerte berücksichtigt.

Bei einer bevorzugten Ausführungsform ist vorgesehen, dass zur Überwachung lateraler Veränderungen der Stellungen der Magnetfelddetektoren gegenüber der jeweiligen Schweissnaht die von den Magnetfelddetektoren erzeugten Messwerte gespeichert werden, dass durch vorzeichenrichtige Subtraktion mit den Kompensationswerten erste korrigierte Messwerte erzeugt und sowohl auf die Überschreitung der Schwellenwerte als auch auf das Vorzeichen hin geprüft werden, dass bei Schwellenwertüberschreitungen in Abhängigkeit von Vorzeichenänderungen der ersten korrigierten Messwerte die Kompensationswerte für die jeweiligen Magnetfelddetektoren auf den Kompensationswert des benachbarten Magnetfelddetektors eingestellt werden, dass durch vorzeichenrichtige Subtraktion mit den neu zugeordneten Kompensationswerten zweite korrigierte Messwerte erzeugt werden, die mit den ersten korrigierten Messwerten verglichen werden, dass bei zweiten korrigierten Messwerten, die kleiner als die ersten korrigierten Messwerte sind, die Schritte mit neu zugeordneten Kompensationswerten der jeweils benachbarten Magnetfelddetektoren wiederholt werden, bis die korrigierten Messwerte grösser als die im vorhergehenden Schritt erhaltenen Messwerte sind, dass die Zuordnung der Kompensationswerte zu den kleinsten erhaltenen korrigierten Messwerten die Ausgangsbasis für die weitere Kompensation ist, dass die kleinsten erhaltenen korrigierten Messwerte auf die Überschreitung der Schwellenwerte geprüft werden und dass bei Schwellenwertüberschreitungen Fehler gemeldet werden.

Durch das Verschieben der «Schweissnaht»-Kompensationswerte ergibt sich, z.B. für Magnetfelddetektoren, bei den lagerichtig zugeordneten Kompensationswerten je ein korrigierter Messwert null, wenn das Muster der Kompensationswerte mit dem Muster der Messwerte übereinstimmt. Abweichungen im Muster führen jeweils zu einem korrigierten Messwert, der grösser oder kleiner als null ist, jedoch für die lagerichtige Zuordnung der Kompensationswerte immer einen Minimalwert ergibt. Ein Fehlersignal, das im Satz der Messwerte enthalten ist, beeinflusst nur die Abweichung des Minimums vom Wert null. Wenn das Minimum den jeweiligen Schwellenwert überschreitet, liegt ein Fehler im Gefüge vor. Um das Auffinden des Minimums zu vereinfachen, wird die Ermittlung des Minimums richtungsabhängig durchgeführt. Unter Ausnutzung der Verschiebeeinrichtung wird das Minimum durch einmaliges Überfahren festgestellt. Wenn die korrigierten Messwerte die Rauschschwelle erreichen, ist keine weitere Zuordnung von benachbarten Kompensationswerten notwendig, da die Rauschschwelle das absolute Minimum darstellt. Veränderungen der Lage der Schweissnaht während der Längsverschiebung der jeweils zu prüfenden Körper bewirken bei diesem Verfahren eine neue Zuordnung der Kompensationswerte, indem diese in den Zellen des ersten Speichers verschoben werden. Die Lageveränderungen zwischen der Schweissnaht und den Magnetfelddetektoren werden mit den gleichen Mitteln wie die Gefügestörungen festgestellt. Lediglich die zeitliche Reihenfolge des Einsatzes der Mittel für die Lageveränderungen und die Gefügestörungen ist unterschiedlich. Damit lässt sich der Aufwand für die Prüfung wesentlich vermindern.

Eine zweckmässige Ausführungsform besteht darin, dass die jeweils mit den grössten Kompensationswerten korrigierten Messwerte bei jeder neuen Zuordnung der Kompensationswerte gespeichert werden, dass danach die Kompensationswerte nochmals jeweils den benachbarten Magnetfelddetektoren zugeordnet werden, dass die gespeicherten Messwerte mit den neu zugeordneten Kompensationswerten korrigiert werden, dass die mit den maximalen Kompensationswerten vor und nach der neuen Zuordnung erhaltenen Messwerte miteinander verglichen werden und dass bei einer Verkleinerung der korrigierten Messwerte aufgrund der neuen Zuordnung der Kompensationswerte diese nochmals jeweils den benachbarten Magnetfelddetektoren zugeordnet werden, während bei Unterschreitung der Schwellenwerte die Zuordnung der Kompensationswerte zu den Magnetfelddetektoren beibehalten wird. Mit dieser Massnahme wird eine Anpassung der Kompensationswerte gemäss der Richtung der Lageänderung zwischen der Schweissnaht und den Magnetfelddetektoren erreicht.

Eine Vorrichtung für die zerstörungsfreie Prüfung ferromagnetischer Körper auf Gefügestörungen mit einem Magnetisierungssystem und mit an oder nahe an der Körperoberfläche des jeweils zu prüfenden Körpers zwischen Magnetpolschuhen des Magnetisierungssystems senkrecht zur Magnetisierungsrichtung angeordneten, ruhenden Magnetfelddetektoren, die zeitmultiplex angesteuert und ausgelesen werden und deren Messwerte mit gespeicherten Kompensationswerten vereinigt werden, ist zur Durchführung des Verfahrens erfindungsgemäss derart ausgebildet, dass die Magnetfelddetektoren jeweils über eine Detektier- und Kodierschaltung mit einem nach Art eines Schieberegisters geschalteten ersten Speicher, mit einem zweiten Speicher und mit einem Subtrahierer verbunden sind, dessen weitere Eingänge wahlweise an die Ausgänge der Detektier- und Kodierschaltung oder des zweiten Speichers anschliessbar sind, dass dem Subtrahierer ein Schwellwertdetektor nachgeschaltet ist, der auf positive und negative Schwellenwerte einstellbar ist und der mit einer Kompensationssteuerschaltung verbunden ist, von der die Verschiebung der Speicherwerte im ersten Speicher, die Auslesung des ersten und zweiten Speichers, die Anlegung der Eingänge des Subtrahierers an die Ausgänge der Detektier- und Kodierschaltung oder des zweiten Speichers sowie die Weiterleitung des Vergleichsergebnisses an eine nachgeschaltete Auswerteeinheit steuerbar ist.

Mit dieser Vorrichtung können auf einfache Weise und mit grosser Geschwindigkeit sowohl die Kompensationswerte an die jeweilige Stellung zwischen der Schweissnaht und den Magnetfelddetektoren angepasst als auch die der jeweiligen Lage entsprechenden korrigierten Messwerte gewonnen und für die spätere Verarbeitung gewichtet werden. Der Subtrahierer der Vergleicher und die Kompensationssteuerschaltung sind vorzugsweise durch einen Mikroprozessor realisiert, von dem auch die Abfrage der Magnetfelddetektoren sowie die zeitmultiplexe Umsetzung der Ausgangssignale der Magnetfelddetektoren in digitale Signale sowie deren Eingabe in den zweiten Speicher gesteuert werden kann.

Zweckmässigerweise ist der Ausgang des ersten Speichers auf den Eingang rückgekoppelt. Diese Anordnung erlaubt die Anpassung der Zahl der Speicherplätze an die Zahl der Magnetfelddetektoren. Der Bedarf an Speicherkapazität ist damit an die jeweiligen Gegebenheiten der Prüfeinrichtung anpassbar.

Weitere zweckmässige Ausgestaltungen sind in den Ansprüchen 6 bis 8 beschrieben.

Die Erfindung wird im folgenden anhand eines in einer Zeichnung dargestellten Ausführungsbeispiels näher beschrieben, aus dem sich weitere Merkmale sowie Vorteile ergeben.

Es zeigen:

Fig. 1 eine perspektivische Ansicht einer Vorrichtung zur zerstörungsfreien Prüfung ferromagnetischer Körper,

Fig. 2 die in Fig. 1 dargestellte Anordnung in einer Ansicht von vorne,

Fig. 3 Einzelheiten der in Fig. 1 dargestellten Reihen aus Magnetfelddetektoren in einer Ansicht von vorne,

Fig. 4 ein Blockschaltbild eines mit Magnetfelddetektoren verbundenen ersten Teils einer Messwertverarbeitungsschaltung,

Fig. 5 ein Diagramm der längs einer kreisförmigen Umfangslinie eines Rohrs für die Unterdrükkung des Streuflusses der Schweissnaht notwendigen Kompensationsgrössen als Funktion der Entfernung von der Schweissnaht,

Fig. 6 ein Blockschaltbild eines an den ersten Teil der Messwertverarbeitungsschaltung angeschlossenen zweiten Teils und

Fig. 7a – c Diagramme der verschiedenen Magnetfelddetektoren zugeordneten Kompensationsgrössen in Abhängigkeit von der jeweiligen Lage der Magnetfelddetektoren am Umfang des zu prüfenden Körpers.

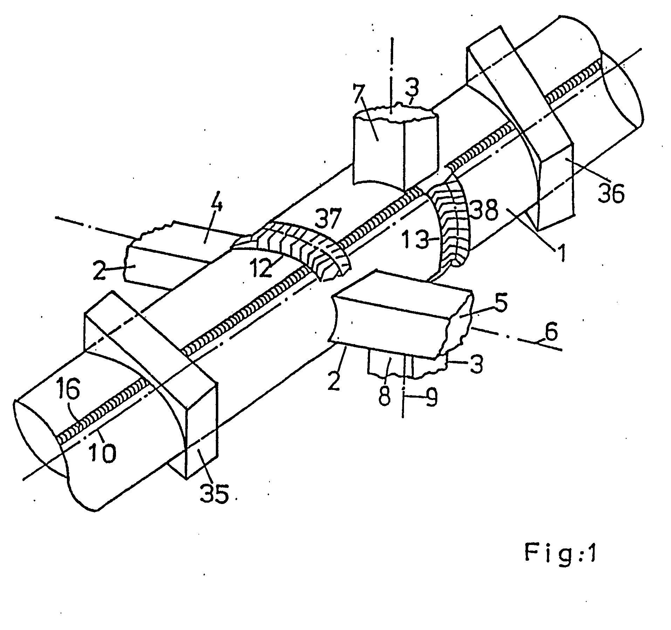

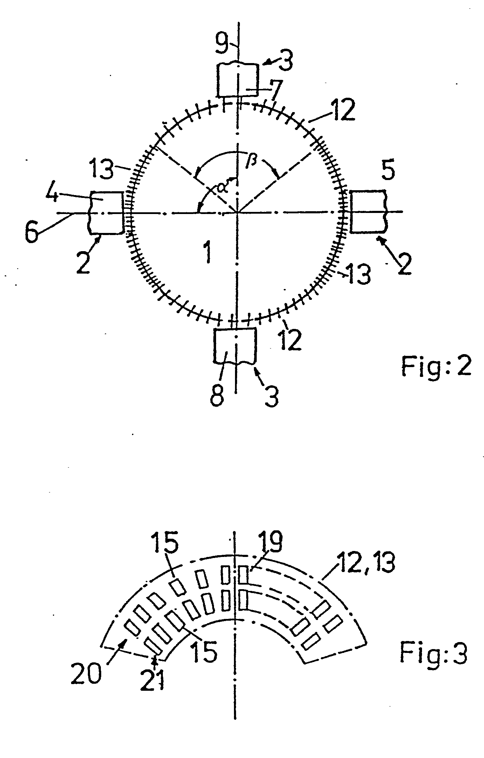

Eine Vorrichtung zur zerstörungsfreien Prüfung ferromagnetischer Rohre 1, von denen in Fig. 1 und 2 eines dargestellt ist, enthält ein Magnetisierungssystem aus zwei Magnetpaaren 2, 3, die in Längsrichtung des Rohres 1 hintereinander angeordnet sind. Das Magnetpaar 2 enthält einen ersten Magnetpolschuh 4, dessen dem Rohr zugewandtes Ende beispielsweise ein magnetischer Nordpol ist, und einen zweiten Magnetpolschuh 5, der an seinem dem Rohr 1 zugewandten Ende einen Magnetpol hat, der demjenigen des ersten Polschuhs 4 entgegengesetzt ist. Die Magnetpolschuhe 4, 5 sind längs der gleichen Mittelachse 6 angeordnet. Das Magnetpaar 3 besteht aus ebenfalls zwei Magnetpolschuhen 7, 8, wobei der Polschuh 7 an seiner dem Rohr 1 zugewandten Stirnfläche einen magnetischen Nordpol und der Polschuh 8 an seiner dem Rohr 1 benachbarten Stirnseite einen magnetischen Südpol hat. Auch die Magnetpolschuhe 7, 8 sind längs einer gemeinsamen Mittelachse 9 angeordnet. Während die Magnetpaare 2 und 3 stationär befestigt sind, wird das Rohr 1 während der Prüfung in Richtung seiner Längsachse 10 zwischen den Magnetpolschuhen 4, 5, 7 und 8 hindurchbewegt. Durch die Magnetpolschuhe 4, 5, 7 und 8 werden zwei Magnetfelder auf das Rohr 1 gerichtet. Die Mittelachsen dieser Magnetfelder stimmen jeweils mit den Mittelachsen 6 und 9 der Magnetpolschuhe 4, 5 bzw. 7, 8 überein. Die Mittelachsen 6 und 9 sind unter einem Winkel gegeneinander geneigt, der dem Quotienten aus einhundertundachtzig Grad und der Zahl der auf das Rohr 1 gerichteten Magnetfelder entspricht. Da auf das Rohr 1 zwei Magnetfelder gerichtet sind, ist der Winkel $\alpha$ neunzig Grad. Die Feldlinien der Magnetfelder verlaufen im Inneren des Rohres überwiegend in den Rohrwänden. Die Magnetfelder sind so stark bemessen, dass die Rohrwände magnetisch gesättigt sind.

Durch Risse, Lunker oder Löcher in den Rohrwänden wird der magnetische Widerstand stark erhöht. Ein Teil des Magnetfeldes schliesst sich nicht über die Risse, Lunker oder Löcher, sondern über die Luftstrecke ausserhalb der äusseren bzw. inneren Rohroberfläche. Dieser Teil des Magnetfeldes wird von Magnetfelddetektoren erfasst. Die Messung eines derartigen ausserhalb der Rohroberfläche verlaufenden Feldes zeigt somit einen Materialfehler bzw. eine Gefügestörung in den Wänden des Rohres 1 an.

Zwischen den die Magnetfelder auf das Rohr 1 richtenden Polschuhen 4, 5 bzw. 7, 8 sind Reihen 12 bzw. 13 von Magnetfelddetektoren entlang der Oberfläche des Rohres 1 angeordnet. Die Reihen 12, 13 befinden sich in geringem Abstand von der Oberfläche des Rohres 1. In Fig. 1 und 2 sind die Reihen 12 und 13 nahe an den Aussenwänden des Rohres 1 angeordnet. Es können auch Reihen von Magnetfelddetektoren im Inneren des Rohres 1 angeordnet sein, die sich entlang der inneren Oberfläche erstrecken.

Die Reihen 12, 13 erfassen in dem Rohr 1 eine Prüfzone, die sich in Achsrichtung 10 erstreckt und eine Breite hat, die der Länge der jeweiligen Reihe 12 bzw. 13 entspricht. Die Reihen 12, 13 sind ebenso wie die Magnetpaare 2, 3 stationär angeordnet. Die beiden Reihen 12 und die beiden Reihen 13 erfassen auf der Oberfläche des Rohres 1 jeweils zwei Zonen, die je einen Winkel β einschliessen, der sich aus einhundertundachtzig Grad dividiert durch die Anzahl der Magnetpole ergibt. Jede einzelne Reihe 12, 13 schliesst mindestens diesen Winkel von 45° ein. Die Reihen 12, 13 können auch länger ausgebildet sein, so dass sich ein Winkel β ergibt, der grösser als 45° ist. Mit der in Fig. 1 und 2 gezeigten Grösse der Reihen 12 und 13 lässt sich das Rohr 1 über den gesamten Umfang prüfen.

Falls eine Prüfvorrichtung benötigt wird, mit der das Rohr 1 nicht über den gesamten Umfang, sondern nur über einen Teil des Umfanges, der zum Beispiel der Breite einer Schweissnaht zuzüglich deren Toleranzzone entspricht, geprüft werden soll, kann eine Reihe von Magnetfelddetektoren vorgesehen werden, die nur die Breite der gewünschten Umfangszone hat. Hierbei kann im Extremfall die Verwendung nur eines Magnetpaares ausreichen. Die in den Fig. 1 und 2 dargestellte Prüfvorrichtung lässt sich schaltungsmässig so betreiben, dass nicht nur der gesamte Umfang, sondern auch nur ein Umfangsteil geprüft werden kann.

Als Magnetfelddetektoren sind in den Reihen 12, 13 Hallgeneratoren vorgesehen, denen als Steuerströme Impulsfolgen zugeführt werden. Die Ausgänge der Hallgeneratoren werden im Zeitmultiplex an eine nachstehend noch beschriebene Auswerteschaltung gelegt. Die zeitmultiplexe Abfrage einer Anzahl von N-Hallgeneratoren ist mit den Impulsfolgen der Steuerströme synchronisiert.

In den Reihen 12, 13 können Hallgeneratoren 15 in unterschiedlicher Ausrichtung zur Oberfläche des Rohres 1 angeordnet sein. Die Hallgeneratoren 15 sind bei der in Fig. 3 gezeigten Ausführungsform mit ihren Breitseiten 19 senkrecht zum gegenüberliegenden Oberflächenelement des Rohres 1 angeordnet. Die Hallgeneratoren 15 sind in zwei Lagen 20, 21 übereinander angebracht. Die Verwendung der jeweiligen Lage 20, 21 für die Fehlerprüfung hängt von Auswahlkriterien der Fehler ab. Die Ausbildung gemäss Fig. 3 lässt eine dichte Packung von Hallgeneratoren 15 nebeneinander zu. Damit können Fehler im Gefüge des Rohres 1 besser lokalisiert werden.

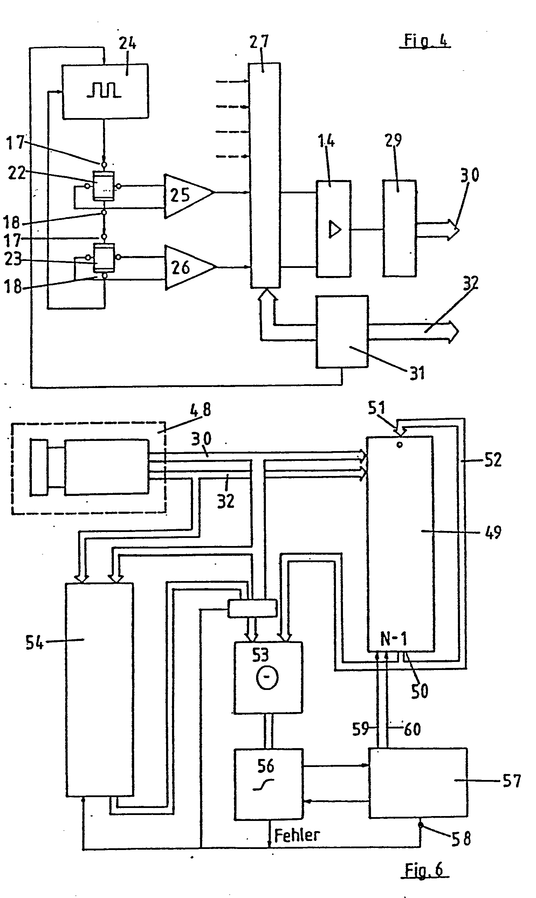

Eine Anordnung der Hallgeneratoren, wie sie in Fig. 4 und 6 der DE-PS 31 32 808 dargestellt ist, ist ebenfalls möglich.

Das Rohr 1 ist geschweisst, d.h. es enthält eine Schweissnaht 16, die sich an der Oberfläche parallel zur Längsachse 10 erstreckt.

In Fig. 4 sind zwei Hallgeneratoren 22, 23 mit ihren Anschlusselektroden 17, 18 dargestellt. Die Reihen 12, 13 werden aus Hallgeneratoren der Anordnungsart 15 gebildet. Die Art der Schaltung aller benachbarte Paare bildenden Hallgeneratoren 15 in einer der Lagen 20, 21 entspricht derjenigen der beiden Hallgeneratoren 22, 23.

Die Zuführelektroden für den Steuerstrom sind bei den Hallgeneratoren 22, 23 in Reihe geschaltet. Ein Konstantstromgenerator 24 speist die Zuführerelektroden für den Steuerstrom. Die Elektroden zur Abnahme der Hallspannung sind bei den Hallgeneratoren 22, 23 jeweils an einen Eingang eines Verstärkers 25, 26 gelegt.

Der Konstantstromgenerator 24 erzeugt eine Impulsfolge mit einem Impulspausen-zu-Impulsdauerverhältnis von 1:10. Durch die Impulsbeaufschlagung der Hallgeneratoren 22, 23 wird die thermische Beanspruchung vermindert. Deshalb können höhere Steuerstromamplituden angewendet werden. Da die Hallspannung den Steuerströmen proportional ist, ergeben sich auch bei kleinen Magnetfeldern ausreichend hohe Hallspannungen. Es tritt eine Steigerung der Parameter der Hallgeneratoren 22, 23 ein. Deshalb können als Hallgeneratoren 22, 23 preisgünstige Sensoren eingesetzt werden, die üblicherweise zur Positionserfassung von Magneten benutzt werden. Die impulsweise Beaufschlagung der Hallgeneratoren 22, 23 mit Steuerströmen erlaubt auch die Überwachung ausgewählter Werte in den Impulspausen. So ist es möglich, in den Impulspausen die temperaturabhängige Nullpunktkonstanz der Hallgeneratoren 22, 23 festzustellen und den Temperaturwerten entsprechende Korrekturgrössen zu bestimmen, mit denen die Messwerte zur Beseitigung des Einflusses von Temperaturveränderungen korrigiert werden.

Die Ausgänge der Verstärker 25, 26 sind mit den Eingängen eines Multiplexers 27 verbunden, an den auch die von den anderen Hallgeneratoren 15 gespeisten Verstärker angeschlossen sind, die nicht näher dargestellt sind. Der Multiplexer 27 steht mit seinen Ausgängen, auf denen die von den Verstärkern 25, 26 oder den anderen nicht dargestellten Verstärkern abgegebenen analogen Signale übertragen werden, mit Eingängen eines Verstärkers 14 in Verbindung, dem ein Analog-Digital-Umsetzer 29 nachgeschaltet ist, an dessen Ausgängen 30 die digitalisierten Messwerte der Hallgeneratoren 22, 23 verfügbar sind. Eine Steuerschaltung 31 synchronisiert die Steuerstromimpulse des Konstantstromgenerators 24 in Übereinstimmung mit an den Multiplexer 27 angelegten Adressen, mit denen die Hallgeneratoren 22, 23 jeweils auf den Verstärker 14 durchgeschaltet werden. An Ausgängen 23 der Steuerschaltung 31 stehen die Adressen zur Kennzeichnung des jeweils ausgewählten Hallgenerators 22, 23 zur Verfügung.

Die Fig. 5 zeigt die von der in einer Bezugslage gegenüber den Magnetfelddetektoren 15 hervorgerufenen Messwerte. In Abszissenrichtung ist dabei der Weg auf dem Rohr 1 dargestellt. Der Weg stellt zumindest einen Teil eines Kreisbogens dar, der sich bei einem Querschnitt durch das Rohr 1 ergibt. In Ordinatenrichtung sind die an der jeweiligen Stelle erhaltenen Messwerte des Streuflusses dargestellt, wobei vorausgesetzt ist, dass im Rohr 1 an den Stellen, an denen die in Fig. 1 dargestellten Messwerte gewonnen wurden, ausser der Schweissnaht keine Gefügestörungen vorhanden sind. Die in Fig. 5 dargestellten Messwerte können an einem Probekörper oder an einer fehlerfreien Stelle eines zu prüfenden Rohres 1 festgestellt und als Kompensationsgrössen im weiteren Verlauf der Prüfung von Rohren 1 gleicher Form und Abmessungen verwendet werden, um die von den jeweiligen Magnetfelddetektoren erzeugten Messwerte jeweils auf ein Minimum, d.h. möglichst auf den Wert null zu kompensieren, sofern keine Gefügestörungen vorhanden sind. Die in Fig. 5 dargestellten Messwerte entstehen in längs der kreisförmigen Mantellinie nebeneinander angeordneten Hallgeneratoren 15. Die Messwerte verlaufen in etwa symmetrisch zur Mitte 28 der Schweissnaht 16. Einige Messwerte 33, 34, 35, 36 sind zur näheren Erläuterung des Verfahrens in Fig. 5 bezeichnet. Die Messwerte 34, 35 sind Maximalwerte. In Fig. 5 ist noch eine Wegeinheit 11 dargestellt, die dem jeweils einem Hallgenerator 15 auf der Oberfläche des Rohres 1 zugeordneten Abschnitt entspricht, der senkrecht zur Längsachse 10 verläuft.

Das Rohr 1 wird in einer bestimmten Winkellage in Längsrichtung durch die in Fig. 1 dargestellte, aus den Magnetpaaren 2, 3 und den Reihen 12, 13 von Magnetfelddetektoren bestehende Vorrichtung geführt. Die nicht näher dargestellte Führung des Rohres 1 verhindert unzulässige grosse Änderungen der ursprünglich eingenommenen Winkellage der Schweissnaht. Gewisse laterale Veränderungen der Stellung der Magnetfelddetektoren gegenüber der Schweissnaht infolge Drehbewegungen des Rohres 1 beim Transport in Längsrichtung lassen sich mit wirtschaftlichem Aufwand nicht vermeiden. Nach der Winkellage der Schweissnaht 16 richtet sich das Auftreten der in Fig. 5 dargestellten Messwerte, beispielsweise der Messwerte 33 bis 36, in den Hallgeneratoren 15. Die Messwerte 33, 34 und 35, 36 treten zum Beispiel jeweils in benachbarten Hallgeneratoren 15 auf. Ein weiterer Messwert 37 ergibt sich in demjenigen Hallgenerator, der sich über der Mitte 28 der Schweissnaht 16 befindet. In Abhängigkeit von der Winkellage der Schweissnaht 16 ist deshalb jeweils einer der in Fig. 5 dargestellten Messwerte einem bestimmten Hallgenerator zugeordnet. Diesem Hallgenerator entspricht eine von der Steuerschaltung 31 erzeugte Adresse. Die Messwerte gemäss Fig. 5 werden nach der Aufnahme in eindeutiger Zuordnung zu den Hallgeneratoren 15 gespeichert. Die Zuordnung erfolgt zweckmässigerweise durch die Einspeicherung in durch eine vorgegebene Reihenfolge festgelegten Zellen eines Speichers. Während der Prüfung des Rohres 1 auf Gefügestörungen werden die in Fig. 5 dargestellten Messwerte als Kompensationswerte verwendet, um Gefügestörungen auch nahe an bzw. in der Schweissnaht 16 feststellen zu können. Die Kompensationswerte und die während der Prüfung erhaltenen Messwerte werden für den jeweiligen Hallgenerator 15 vorzeichenrichtig miteinander verrechnet. Dies bedeutet, dass die Messwerte 33, 34, die im folgenden als Kompensationswerte bezeichnet sind, von den Messwerten der entsprechenden Hallgeneratoren 15 subtrahiert werden, während die Messwerte 35, 36, bei denen es sich ebenfalls um Kompensationswerte handelt, mit den Messwerten der entsprechenden Hallgeneratoren 15 aufsummiert werden. Durch die Adressierung des Multiplexers 27 und die damit verbundene Abfrage der Hallgeneratoren 15 wird die Rotation einer Magnetfeldsonde elektronisch simuliert. Die aufeinanderfolgende Abfrage der Hallgeneratoren 15 kann durch die Verwendung elektronischer Schaltelemente sehr schnell erfolgen. Damit wird eine «Rotationsgeschwindigkeit» simuliert, die wesentlich grösser als die mit mechanischen Mitteln wirtschaftlich erzielbaren Geschwindigkeiten drehbarer Magnetfeldsonden ist.

Nach der Subtraktion der Kompensationswerte 33 bis 37 und der weiteren nicht näher bezeichneten, aus Fig. 5 ersichtlichen Kompensationswerte ergeben sich korrigierte Messwerte, aus denen der Einfluss der Schweissnaht 16 weitgehend beseitigt ist. Diese korrigierten Messwerte unterliegen einer weiteren Prüfung. Sie werden mit vorab festlegbaren Schwellenwerten auf das Vorhandensein von Gefügestörungen geprüft. Es können die Messwerte aller Hallgeneratoren 15 mit den gleichen Bezugsschwellen gewichtet werden. Diese gleiche Gewichtung ist möglich, da die Kompensation durch Subtraktion ein linearer Prozess ist und durch die Digitalisierung ebenfalls keine Dynamikprobleme auftreten können.

Eine exakte Einhaltung der jeweiligen Winkellage der Schweissnaht 16 während der Längsverschiebung des Rohres 1 ist wegen des damit verbundenen sehr hohen konstruktiven Aufwandes wirtschaftlich nicht vertretbar. Infolgedessen können Winkelbewegungen des Rohres 1 während der Längsverschiebung auftreten. Diese Winkelbewegungen verändern die Stellungen der Hallgeneratoren 15 gegenüber der Schweissnaht 16. Um auch bei einer Veränderung der Winkellage der Schweissnaht 16 im Verlauf der Längsbewegung den Einfluss der Schweissnaht auf die Messwerte korrigieren zu können, wird die Veränderung der Winkellage überwacht. Entsprechend dieser Veränderung der Winkellage der Schweissnaht 16 werden die Kompensationswerte 33 bis 37 und die weiteren, in Fig. 5 darge-stellten, nicht näher bezeichneten Kompensa-tionswerte neu auf die jeweiligen Hallgeneratoren 15 aufgeteilt. Die Korrektur der Messwerte wird mit den neu zugeordneten Kompensations-werten vorgenommen, bevor die Weiterverarbei-tung auf der Grundlage der Schwellenwerte durchgeführt wird.

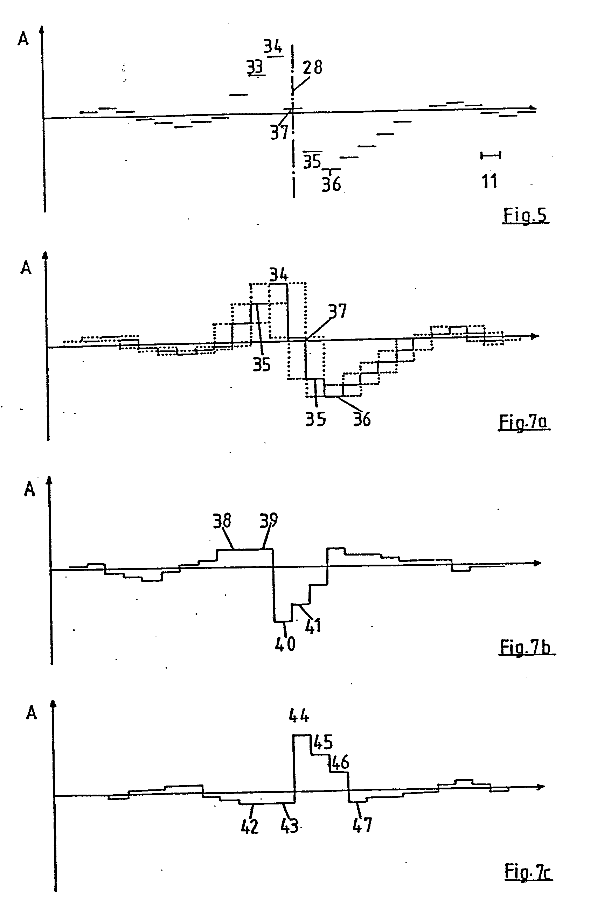

Die Änderung der Drehwinkellage der Schweissnaht 16 während der Längsverschiebung des Rohres 1 wird auf folgende Weise detek-tiert. Es werden nicht nur die korrigierten Messwerte auf ihre Lage ausserhalb der Schwellenwerte, sondern auch die Vorzeichen der Messwerte festgestellt, bei denen die Überschreitung der Schwellenwerte auftritt. Die Anzeigen von Schwellenwertüberschreitungen werden zunächst nicht als Hinweis für Gefügestörungen im Material des Rohres 1, sondern als Hinweis für eine Änderung der Winkellage der Schweissnaht 16 ausgewertet. Dies wird anhand der Fig. 7a – 7c verdeutlicht.

Die Kompensationswerte 33 bis 37 und andere nicht bezeichnete Kompensationswerte für eine vorgegebene Winkellage des Rohres 1 sind in Fig. 7a nochmals dargestellt. Bei der Prüfung des Rohres 1 werden die mit den Hallgeneratoren 15 erfassten Messwerte in der durch die Fig. 7a vor-gegebenen Zuordnung mit den Kompensations-werten verrechnet. Wenn keine Gefügestörun-gen vorhanden sind, sind die Messwerte in etwa gleich gross wie die Kompensationswerte. Das Ergebnis der Subtraktion der Kompensationswerte von den Messwerten ist daher ein Betragsminimum von ungefähr null. Solange daher keine Störungen durch ausserhalb der Schwellenwerte liegende korrigierte Messwerte gemeldet werden, wird die Zuordnung der Kompensationswerte zu den Hallgeneratoren 15 beibehalten.

Es sei angenommen, dass sich während der Längsbewegung des Rohres 1 eine Änderung der Winkelstellung der Schweissnaht 16 um eine Wegeinheit 11 ergeben hat, die der jeweils einem Hallgenerator 15 auf dem Umfang quer zur Längsachse 10 zugeordneten Wegeinheit 11 entspricht. Die Korrektur der von den Hallgeneratoren 15 erzeugten Messwerte wird zunächst mit den durch die ausgezogene Linie in Fig. 7a dargestellten Kompensationswerten vorgenommen. Die aufgenommenen Messwerte entsprechen aber einer lateralen Verschiebung der Hallgeneratoren 15 nach links gegenüber der Schweissnaht 16 um die Position eines Hallgenerators 15.

Infolgedessen treten – unter der Ausnahme, dass keine Gefügestörungen vorhanden sind – Messwerte auf, die in Fig. 7a mit schrägen Stri-chen gekennzeichnet sind. Die Kompensations-werte 33 bis 37 und die nicht bezeichneten Kompensationswerte werden von diesen Messwerten subtrahiert. Das Ergebnis sind die in Fig. 7b dargestellten korrigierten Messwerte, von denen eine grosse Anzahl die vorgegebenen Schwellenwerte überschreitet. Es wird also eine Fehlermeldung erzeugt. In Fig. 7b sind einige korrigierte Messwerte, die die vorgegebenen Schwellenwerte überschreiten, mit 38, 39, 40, 41 bezeichnet. Zugleich mit der Feststellung der Schwellenwert-überschreitung wird für die jeweiligen Hallgeneratoren 15 das Vorzeichen des korrigierten Messwertes, zum Beispiel 38 bis 41, festgestellt. Einer Winkeldrehung der Schweissnaht 16 in eine bestimmte Richtung, zum Beispiel nach links, entspricht ein bestimmtes Vorzeichen der korrigierten Messwerte. War beispielsweise das Vorzeichen der korrigierten Messwerte negativ und wird bei den nachfolgend gewonnenen Messwerten nach der Korrektur mit den neuen Kompensa-tionsgrössen ein positives Vorzeichen festge-stellt, dann hat eine Winkeldrehung nach links stattgefunden. Dieser Fall ist in Fig. 7b dargestellt. Nach der Feststellung der Änderung der Winkellage der Schweissnaht 16 werden die Kompensationswerte neu zugeordnet.

Diese neue Zuordnung besteht für den in Fig. 7b gezeigten Fall darin, dass die Kompensationswerte um die Position eines Hallgenerators 15 nach links verschoben werden, d.h. die Kompensationswerte der Hallgeneratoren 15 werden jeweils dem auf der linken Seite benachbarten Hallgenerator zugeordnet. Nach der neuen Zuordnung der Kompensationswerte werden die ursprünglichen Messwerte erneut korrigiert und danach mit den zuvor bestimmten korrigierten Messwerten verglichen sowie auf die Überschreitung der vorgegebenen Schwellen geprüft. Wenn die mit neuen Kompensationswerten erhaltenen, zweiten korrigierten Messwerte kleiner als die ersten korrigierten Messwerte sind, kann eine weitere Zuordnung benachbarter Kompensationswerte in der gleichen Richtung vorgenommen werden. Dann ergeben sich dritte korrigierte Messwerte, die mit den zweiten korrigierten Messwerten verglichen werden. Sind die dritten korrigierten Messwerte grösser als die zweiten korrigierten Messwerte, dann gelten die für die zweiten korrigierten Messwerte getroffenen Zuordnungen der Kompensationswerte. Überschreiten einige oder alle der zweiten korrigierten Messwerte noch die vorab eingestellte Schwelle, liegt ein Fehler vor. Sind die dritten korrigierten Messwerte jedoch kleiner als die zweiten korrigierten Messwerte, wird eine neue Zuordnung von Kompensationswerten vorgenommen. Danach werden vierte korrigierte Messwerte gebildet und mit den vorher festgestellten korrigierten Messwerten verglichen, bis die zuletzt erhaltenen korrigierten Messwerte grösser sind als die zuvor bestimmten Messwerte.

Bei einer Änderung der Winkellage der Schweissnaht 16 um eine Wegeinheit 11 nach rechts ergeben sich beispielsweise die in Fig. 7a gestrichelt dargestellten Messwerte, die durch die Kompensationswerte 33 bis 37 und die nicht bezeichneten Kompensationswerte korrigiert werden. Das Ergebnis dieser Korrektur ist in Fig. 7c dargestellt. Es treten zum Beispiel korrigierte Messwerte 42, 43, 44, 45, 46, 47 auf, die ausserhalb der durch die vorgegebenen Schwellenwerte festgelegten Bereiche liegen. Der Verschiebung der Schweissnaht 16 nach rechts entspricht ein negatives Vorzeichen an denjenigen Umfangsstellen, deren Hallgeneratoren 15 korrigierte Messwerte mit positivem Vorzeichen bzw. mit dem Wert null ausgelöst hatten. Nach der Feststellung der Schwellenwertüberschreitungen und der damit zusammenhängenden Vorzeichen werden die Kompensationswerte neu zugeordnet. Diese Zuordnung besteht für den in Fig. 7c dargestellten Fall darin, dass die Kompensationswerte um eine Position eines Hallgenerators 15 nach rechts «verschoben» werden, d.h. die Kompensationswerte der Hallgeneratoren 15 werden jeweils dem auf der rechten Seite benachbarten Hallgenerator zugeordnet. Nach der neuen Zuordnung der Kompensationswerte werden die ursprünglichen Messwerte erneut korrigiert und mit den zuvor erhaltenen korrigierten Messwerten verglichen sowie auf die Überschreitung der vorgegebenen Schwellen geprüft.

Da eine einmal ausgelöste Änderung der Winkellage der Schweissnaht 16 die Tendenz zur Zunahme haben kann, ist eine weitergehende Massnahme angebracht, die im folgenden näher erläutert.wird:

Es wird jeweils eine weitere «Verschiebung» der Kompensationswerte in der durch die Vorzeichen der korrigierten Messwerte 38 bis 41 bzw. 42 bis 47 bestimmten Richtung durchgeführt. Die Kompensationswerte der Hallgeneratoren 15 werden dabei, je nach den Vorzeichen, entweder dem jeweils rechts oder dem jeweils links benachbarten Hallgenerator 15 zugeordnet. Anschliessend werden die maximalen Kompensationswerte 34, 36 von den jeweils gespeicherten Messwerten subtrahiert. Die sich hieraus ergebenden korrigierten Messwerte sind mit den bereits vor der neuen Zuordnung erhaltenen korrigierten Messwerten zu vergleichen. Wenn die nach der neuen Zuordnung der Kompensationswerte erhaltenen korrigierten Messwerte kleiner als die vor der neuen Zuordnung bestimmten korrigierten Messwerte sind, so ist die zweite Kompensation beizubehalten, wenn die Schwellenwerte unterschritten werden. Sind die nach der weiteren Zuordnung erhaltenen korrigierten Messwerte dagegen grösser, dann ist die weitere Zuordnung rückgängig zu machen. Diese Methode wird so lange fortgesetzt, bis durch die Zuordnung entsprechender Kompensationswerte für die jeweiligen Magnetfelddetektoren die minimalen korrigierten Messwerte erhalten werden. Die Anordnung sucht somit das Korrelationsoptimum, also das Anzeigenbetragsminimum zwischen Messwertsatz und Kompensationswertesatz. Eine Vorrichtung zur Durchführung der vorstehend beschriebenen Verfahrensschritte ist in Fig. 6 dargestellt. Die Vorrichtung gemäss Fig. 6 enthält den in Fig. 4 gezeigten Teil, der mit 48 bezeichnet ist und als Dedektier- und Kodierschaltung arbeitet.

An die Ausgänge 30 ist ein erster Speicher 49 zur Aufnahme der Kompensationsmusterwerte angeschlossen, dessen Ausgang 50 über Leitungen 52 auf die Eingänge 51 rückgekoppelt sind.

Der Speicher 49 ist als RAM, d.h. als Speicher mit wahlfreiem Zugriff, ausgebildet. Für 64 Magnetfelddetektoren eignet sich ein Speicher, der unter der Type HM-6512 von der Fa. Harris hergestellt wird. Der Speicher hat eine Kapazität von 64 Werten à 12 Bit. Die Ausgänge 30 sind weiterhin mit dem einen Eingang eines Subtrahierers 53 verbunden, dessen weiterer Eingang an die Ausgänge 50 des Speichers 49 anlegbar ist. Der Subtrahierer 53 weist zwei verschiedene Eingänge auf, die für die parallele Eingabe von Werten jeweils mehrere Stellen umfassen können. Zusätzlich ist an die Ausgänge 30 ein zweiter Speicher 54 als Puffer für die Messwertpakete angeschlossen, bei dem es sich ebenfalls um einen Speicher mit wahlfreiem Zugriff handelt. Der Ausgang 55 des Speichers 54 ist wahlweise mit dem Eingang des Subtrahierers 53 verbindbar.

Die Ausgänge 32 sind an die Adressierschaltungen der Speicher 49 und 54 angeschlossen.

Dem Subtrahierer 53 ist ein Schwellwertdetektor 56 nachgeschaltet, der auf einen positiven und einen negativen Schwellenwert eingestellt wird. Die Schwellenwerte legen die Grenzen fest, die für die Erkennung einer Gefügestörung massgebend sind. Wenn die Schwellenwerte jeweils überschritten werden, erzeugt der Schwellwertdetektor 56 an seinem Ausgang ein Fehlersignal. An den Schwellwertdetektor 56 ist eine Kompensationssteuerschaltung 57 angeschlossen, der das Ausgangssignal des Schwellwertdetektors 56 zugeführt wird. Die Kompensationssteuerschaltung 57 beeinflusst auch die Freigabe der Fehleranzeige des Schwellwertdetektors 56. Weiterhin weist die Kompensationssteuerschaltung 57 einen Ausgang 58 zur Steuerung der Auslesung des Inhalts des Speichers 54 und zur Umschaltung des Eingangs des Subtrahierers von den Ausgängen 30 auf die Ausgänge 55 auf. Zwei weitere Ausgänge 59, 60 der Kompensationssteuerschaltung 57 sind an den Speicher 49 gelegt. Die Ausgänge 59, 60 steuern die Verschiebung der Inhalte des Speichers 49 jeweils in einer Richtung. Die Synchronisation zwischen der zeitmultiplexen Abfrage der Hallgeneratoren und der Kompensationssteuerschaltung 57 findet über die Adressen statt, die den Hallgeneratoren jeweils zugeordnet sind.

Im Speicher 49 sind die Kompensationswerte unter Adressen gespeichert, die den jeweiligen Hallgeneratoren 15 zugeordnet sind. Beim Einlesen der Kompensationswerte speisen die Ausgänge 30 die von einem Probekörper erhaltenen Messwerte in den Speicher 49 ein. Wenn die Kompensationswerte im Speicher 49 vorhanden sind, steuern die Ausgänge 32 das Auslesen der Kompensationswerte beim Zuführen der Messwerte zum Subtrahierer 53, in dem die Differenz zwischen dem jeweiligen Messwert eines Hallgenerators 15 und dem diesem zugeordneten Kompensationswert gebildet wird. Die korrigierten Messwerte gelangen zum Schwellwertdetektor 56, dessen Ausgangssignal von der Kompensationssteuerschaltung 57 überwacht wird. Falls die vorgegebenen Grenzen nicht überschritten werden, greift die Kompensationssteuerschaltung 57 nicht in den Ablauf der Verarbeitung der Messwerte ein. Die Messwerte gelangen nicht nur zum Subtrahierer 53, sondern auch in den Speicher 54, damit die Messwerte für eine eventuelle Korrektur noch zur Verfügung stehen.

Meldet der Schwellwertdetektor 56 eine Überschreitung eines oder beider Schwellenwerte an, dann prüft die Kompensationssteuerschaltung 57 anhand des Vorzeichens der korrigierten Messwerte die Richtung, in der eine Verschiebung der Inhalte des Speichers 49 erforderlich ist und gibt einen entsprechenden Befehl über einen der Ausgänge 59, 60 an den Speicher 49 aus, in dem die Inhalte der Speicherzellen jeweils um eine Speicherzelle verschoben werden. Der Speicher 49 arbeitet daher nach Art eines Schieberegisters, dessen Inhalt in beiden Richtungen verschoben werden kann. Anschliessend veranlasst die Kompensationssteuerschaltung 57 die Auslesung der Messwerte aus dem Speicher 54, die Zufuhr der Messwerte zum Subtrahierer 53 und die Bildung der Differenz der Messwerte und der Kompensationswerte. Die auf diese Weise korrigierten Messwerte gelangen wiederum zum Schwellwertdetektor, in dem sie erneut geprüft werden. Die Maximalwerte des Betragsintegrals mit Vorzeichen werden zunächst über die Zahl der Messwerte sowie der absoluten Messwerte abgespeichert. Danach veranlasst die Kompensationssteuerschaltung 57 eine erneute Verschiebung des Inhalts im Speicher 49, um jeweils eine Speicherzelle in der zuvor festgelegten Richtung. Mit den auf diese Weise neu zugeordneten Kompensationswerten werden erneut korrigierte Messwerte anhand des Inhalts des Speichers 54 gebildet. Die maximalen korrigierten Messwerte sowie das Betragsintegral dienen zum Vergleich mit den maximalen korrigierten Messwerten gemäss der zuvor durchgeführten Verschiebeoperation im Speicher 49. Ergeben sich dabei geringere Werte, wird die letzte Verschiebeoperation beibehalten, ansonsten wird die letzte Verschiebeoperation im Speicher 49 rückgängig gemacht. Anschliessend werden die korrigierten Messwerte im Schwellwertdetektor gegebenenfalls durch Einstellung neuer Schwellenwerte auf Gefügefehler hin untersucht. Die Schaltung sucht das Optimum der Korrelation zwischen Messwert- und Kompensationdatensatz. Dies drückt sich allgemein durch ein Minimum im Integral der Anzeigewerte aus. Im fehlerfreien Fall kann dies annähernd null sein. Tritt ein Fehler im Signal auf, so bleibt dieses Signal auch als Minimalwert oberhalb der vorgegebenen Schwelle, da das Minimum durch den Fehler entsprechend weit vom fehlerfreien Idealfall entfernt ist. Die Suche nach dem Minimum ergibt einen stabilen Regelkreis zumal der Vorgang abgebrochen wird, sobald sich das Signal unterhalb der Schwelle des Schwelldetektors 56 befindet. Dies verhindert, dass das System durch Rauschsignale in Regelschwingungen gerät.

## Patentansprüche

1. Verfahren zur zerstörungsfreien Prüfung ferromagnetischer Körper auf Gefügestörungen mittels Magnetisierung des jeweiligen Körpers, in dem die Gefügestörungen Veränderungen des Magnetfeldverlaufs hervorrufen, die von an oder nahe an der Körperoberfläche angeordneten, ruhenden Magnetfelddetektoren erfasst werden, die längs des Umfangs des Körpers, senkrecht zur Magnetisierungsrichtung angeordnet sind und deren Ausgänge in einer vorgegebenen Reihenfolge zeitmultiplex an eine Auswerteschaltung angeschlossen werden, wobei den Magnetfelddetektoren jeweils Kompensationswerte zugeordnet sind, mit denen die bei der Messung eines Körpers ohne Gefügestörungen ausgegebenen Messwerte kompensiert werden und wobei Stellungsänderungen der Magnetfelddetektoren bezüglich der Lage des Körpers festgestellt und danach die Kompensationswerte bestimmt werden, dadurch gekennzeichnet, dass zuerst die Kompensationswerte in Abhängigkeit von der Stellung des jeweiligen Magnetfelddetektors gegenüber einer Bezugslage einer Schweissnaht ermittelt werden, dass während der Messung an einem Prüfling die lateralen Veränderungen der Stellungen der Magnetfelddetektoren bei Auslenkungen der Schweissnaht (16) aus der Bezugslage festgestellt werden, dass danach die Kompensationswerte gemäss den Veränderungen der Stellungen der Magnetfelddetektoren derart neu zugeordnet werden, dass die Messwerte und die Kompensationswerte jeweils ein Minimum ergeben, dass anschliessend die Kompensationswerte von den Messwerten vorzeichenrichtig subtrahiert werden und dass sodann die entsprechend korrigierten Messwerte mit vorab festlegbaren Schwellenwerten auf das Vorhandensein von Gefügestörungen geprüft werden.

2. Verfahren nach Anspruch 1, dadurch gekennzeichnet, dass zur Überwachung lateraler Veränderungen der Stellungen der Magnetfelddetektoren gegenüber der jeweiligen Schweissnaht (16) die von den Magnetfelddetektoren erzeugten Messwerte gespeichert werden, dass durch vorzeichenrichtige Subtraktion mit den Kompensationswerten erste korrigierte Messwerte erzeugt werden und sowohl auf die Überschreitung der Schwellenwerte als auch auf das Vorzeichen und das Betragsintegral über alle Messwerte hin geprüft werden, dass bei Schwellenwertüberschreitungen in Abhängigkeit von Vorzeichenänderungen der ersten korrigierten Messwerte die Kompensationswerte für die jeweiligen Magnetfelddetektoren auf den Kompensationswert des benachbarten Magnetfelddetektors eingestellt werden, dass durch vorzeichenrichtige Subtraktion mit den neu zugeordneten Kompensationswerten zweite korrigierte Messwerte erzeugt werden, die mit den ersten korrigierten Messwerten verglichen werden, dass bei zweiten korrigierten Messwerten, die kleiner als die ersten korrigierten Messwerte sind, die Schritte mit neu zugeordneten Kompensationswerten der jeweils benachbarten Magnetfelddetektoren wiederholt werden, bis die korrigierten Messwerte grösser als die im vorhergehenden Schritt erhaltenen Messwerte sind, dass die Zuordnung der Kompensationswerte zu den kleinsten erhaltenen korrigierten Messwerten die Ausgangsbasis für die weitere Kompensation ist, dass die kleinsten erhaltenen korrigierten Messwerte auf die Überschreitung der Schwellenwerte geprüft werden und dass bei Schwellenwertüberschreitungen Fehler gemeldet werden.

3. Verfahren nach Anspruch 2, dadurch gekennzeichnet, dass die jeweils mit den grössten Kompensationswerten korrigierten Messwerte sowie das Betragsintegral bei jeder neuen Zuordnung der Kompensationswerte gespeichert werden, dass danach die Kompensationswerte nochmals jeweils den benachbarten Magnetfelddetektoren zugeordnet werden, dass die gespeicherten Messwerte mit den neu zugeordneten Kompensationswerten korrigiert werden, dass die mit den maximalen Kompensationswerten korrigierten vor und nach der neuen Zuordnung erhaltenen Messwerte miteinander verglichen werden und dass bei einer Verkleinerung der korrigierten Messwerte aufgrund der neuen Zuordnung der Kompensationswerte diese nochmals jeweils den benachbarten Magnetfeldsonden zugeordnet werden, während bei Unterschreitung der Schwellenwerte die Zuordnung der Kompensationswerte zu den Magnetfelddetektoren beibehalten wird.

4. Vorrichtung für die zerstörungsfreie Prüfung ferromagnetischer Körper auf Gefügestörungen mit einem Magnetisierungssystem und mit an oder nahe an der Körperoberfläche des jeweils zu prüfenden Körpers zwischen Magnetpolschuhen (4, 5) des Magnetisierungssystems senkrecht zur Magnetisierungsrichtung angeordneten, ruhenden Magnetfelddetektoren (15, 25, 26), die zeitmultiplex angesteuert und ausgelesen werden und deren Messwerte mit gespeicherten Kompensationswerten vereinigt werden, zur Durchführung des Verfahrens nach Anspruch 1 oder einem der folgenden Ansprüche, dadurch gekennzeichnet, dass die Magnetfelddetektoren (15, 25, 26) jeweils über eine Detektier- und Kodierschaltung (48) mit einem nach Art eines Schieberegisters geschalteten ersten Speicher (49), mit einem zweiten Speicher (54) und mit einem Subtrahierer (53) verbunden sind, dessen weitere Eingänge wahlweise an die Ausgänge der Detektierschaltung (48) oder des zweiten Speichers (54) anschliessbar sind, dass dem Subtrahierer (53) ein Schwellwertdetektor (56) nachgeschaltet ist, der auf positive und negative Schwellenwerte einstellbar ist und der mit einer Kompensationssteuerschaltung (57) verbunden ist, von der die Verschiebung der Speicherwerte im ersten Speicher (49) die Auslesung des ersten und zweiten Speichers (49, 54), die Anlegung der Eingänge des Subtrahierers (53) an die Ausgänge der Detektierschaltung oder zweiten Speichers (48, 54) sowie die Weiterleitung des Vergleichsergebnisses an eine nachgeschaltete Auswerteeinheit steuerbar ist.

5. Vorrichtung nach Anspruch 4, dadurch gekennzeichnet, dass der Ausgang (50) des ersten Speichers (49) auf den Eingang (51) rückgekoppelt ist.

6. Vorrichtung nach Anspruch 4 oder 5, dadurch gekennzeichnet, dass die Speicher (49, 54) für wahlfreien Zugriff ausgebildet sind.

7. Vorrichtung nach einem der Ansprüche 4 bis 6, dadurch gekennzeichnet, dass mit der Steuerschaltung (57) eine Verschiebung der Inhalte benachbarter Speicherzellen des ersten Speichers (49) wahlweise in zwei Richtungen steuerbar ist.

8. Vorrichtung nach einem der Ansprüche 4 bis 7, dadurch gekennzeichnet, dass der Subtrahierer (53), der Schwellwertdetektor (56) und die Kompensationssteuerschaltung (57) durch einen Mikroprozessor gebildet sind.

## Revendications

1. Procédé de contrôle non destructif des perturbations de réseau de corps ferromagnétiques au moyen de la magnétisation de chaque corps dans lequel les perturbations de réseau provoquent des modifications d'allure du champ magnétique, qui sont saisies par des détecteurs de champ magnétique, reposant à la surface du corps, ou à proximité, qui sont disposés à la périphérie du corps, perpendiculairement à la direction de magnétisation et dont les sorties sont branchées dans une succession déterminée par multiplexage à un circuit d'évaluation, les détecteurs de champ magnétique recevant des valeurs de compensation, déterminées par les mesures d'un corps sans perturbation de réseau et prenant en compte les variations de position des détecteurs de champ magnétique par rapport à la position du corps, ce qui détermine les valeurs de compensation, caractérisé en ce que, sont d'abord déterminées les valeurs de compensation en fonction de la position de chaque détecteur de champ mangétique vis-à-vis d'une position de référence d'un cordon de soudure, lors de la mesure d'un échantillon, les écarts latéraux de position des détecteurs de champ magnétique sont déterminés par déplacement du cordon de soudure (16) hors de la position de référence, ensuite les valeurs de compensation sont recalculées en fonction des modifications de position des détecteurs de champ magnétique, de sorte que les valeurs mesurées et les valeurs de compensation représentent chaque fois un minimum, et qu'ensuite les valeurs de compensation sont soustraites algébriquement des valeurs mesurées, et qu'alors les valeurs de mesures corrigées sont comparées à des valeurs de seuil, affichées au préalable pour conclure à la présence éventuelle de perturbations de réseau.

2. Procécé selon la revendication 1, caractérisé en ce que pour vérifier les déplacements latéraux de position des détecteurs de champ magnétique vis-à-vis de chaque cordon de soudure (16), les valeurs de mesure obtenues sont enregistrées, et après soustraction algébrique des valeurs de compensation, on obtient des valeurs de mesure corrigés que l'on teste, aussi bien le dépassement des valeurs de seuil, que le signe et l'intégrale, et que, pour des dépassements de seuil en fonction de changements de signe des premières valeurs de mesure corrigées, les valeurs de compensations pour chaque détecteur de champ magnétique sont réglées sur la valeur de compensation du détecteur de champ magnétique voisin, de sorte que par soustraction algébrique avec les nouvelles valeurs de compensation appropriées, on obtienne des valeurs corrigées une deuxième fois, qui sont comparées aux premières valeurs de mesure corrigées, que, pour les deuxièmes valeurs de mesure corrigées, qui sont plus petites que les premières valeurs de mesure corrigées, les pas avec les nouvelles valeurs de compensations appropriées aux détecteurs de champ magnétique voisin, sont répétés jusqu'à ce que les valeurs de mesure corrigés deviennent plus grandes que les valeurs de mesure obtenues au pas précédent, et que l'attribution des valeurs de compensation aux valeurs de mesure corrigées les plus petites obtenues constitue la base de départ pour la compensation suivante, et que l'on teste le dépassement des valeurs de seuil et que le dépassement des valeurs de seuil signale le défaut.

3. Procédé selon la revendication 2, caractérisé en ce que chaque valeur de mesure corrigée avec les plus grandes valeurs de compensation ainsi que l'intégrale somme pour chaque nouvelle attribution de valeurs de compensation est enregistrée, qu'ensuite les valeurs de compensation sont encore attribuées à chaque détecteur de champ magnétique voisin, que les valeurs de mesure enregistrées sont corrigées avec les nouvelles valeurs de compensation attribuées et qu'on compare entre elles les valeurs de mesure obtenues avec les valeurs de compensation maximales avant et après la nouvelle attribution, et que pour une diminution des valeurs de mesure corrigées, en raison de la nouvelle attribution, la nouvelle attribution des valeurs de compensation est encore affectée à chaque sonde de champ magnétique voisine, tandis qu'en cas du dépassement des valeurs de seuil, l'attribution des valeurs de compensation aux détecteurs de champ magnétique est conservée.

4. Dispositif de contrôle non destructif de perturbations de réseau de corps ferromagnétiques avec un système de magnétisation, avec des détecteurs de champ magnétique (15, 25, 26) disposés à la surface du corps à contrôler ou à proximité entre les pièces polaires (4, 5) du système de magnétisation, perpendiculairement à la direction de magnétisation, qui sont commandés et lus par multiplexage et dont les valeurs de mesures sont lissées avec des valeurs de compensation, pour réaliser le procédé de la revendication 1 ou d'une des revendications suivantes, caractérisé en ce que les détecteurs de champ magnétique (15, 25, 26) sont reliés par l'intermédiaire d'un circuit de détection et de codage (48) à une première mémoire (49) branchée en registre à décalage, à une deuxième mémoire (54) et à un soustracteur (53), dont d'autres entrées peuvent à volonté être branchées aux sorties du circuit de détection (48) ou de la deuxième mémoire, qu'un discriminateur (56) est branché en aval du soustracteur (53), qui est réglable sur des valeurs de seuil positives ou négatives et qui est relié à un circuit de commande de compensation (57), qui commande l'envoi des valeurs mémorisées dans la première mémoire (49), la lecture de la première et de la deuxième mémoire (49, 54), la connexion des entrées du soustracteur (53) aux sorties du circuit de détection ou de la deuxième mémoire (58, 54), ainsi que la transmission des résultats de comparaison à une unité d'évaluation branchée en aval.

5. Dispositif selon la revendication 4, caractérisé en ce que, la sortie (50) de la première mémoire (49) est branchée en réaction à l'entrée (51).

6. Dispositif selon la revendication 4 ou 5, caractérisé en ce que les mémoires (49, 54) sont conçues en accès direct.

7. Dispositif selon l'une des revendications 4 à 6, caractérisé en ce que, à l'aide du circuit de commande (57) on peut commander à volonté, dans deux directions, un déplacement des contenus de cases mémoires voisines de la première mémoire (49).

8. Dispositif selon l'une des revendications 4 à 7, caractérisé en ce que le soustracteur (53), le discriminateur (56) et le circuit de commande de compensation (57) sont constitués par un microprocesseur.

**Claims**

1. Process for non-destructive testing of ferromagnetic bodies for structural faults by magnetising the body in question, in which the structural faults cause changes of the magnetic field configuration detected by static magnetic field detectors arranged on or close to the surface of the body, said magnetic field detectors being arranged along the periphery of the body at right angles to the direction of magnetisation, their outputs being connected in predetermined sequence and time division multiplexing manner to an evaluation circuit, whereby compensation values are assigned to each magnetic field detector, by means of which the measured values furnished when measuring a body without structural faults are compensated and whereby positional changes of the magnetic field detectors are determined with reference to the position of the body and the compensation values are determined accordingly, characterized in that the compensation values are first determined as a function of the position of the magnetic field detector in question in relation to a reference position of a weld seam, in that while measuring on a test piece the lateral changes in the positions of the magnetic field detectors are determined when weld seam (16) deviates from the reference position, in that the compensation values are then newly assigned in accordance with the changes in the position of the magnetic field detectors in such a manner that the measured values and the compensation values result, in each case, in a minimum, in that the compensation values are then substracted from the measured values in correctly signed manner and in that the appropriately corrected measured values are then tested by means of predeterminable threshold values for the presence of structural faults.

2. Process according to claim 1, characterized in that the measured values generated by the magnetic field detectors are stored in order to monitor lateral changes in the positions of the magnetic field detectors in relation to the given weld seam (16) in that by subtraction in correctly signed manner using the compensation values first corrected measured values are generated and tested both for the threshold values being exceeded as also for the sign and amount integral for all measured values, in that where threshold values are exceeded the compensation values for the given magnetic field detectors are set, as a function of changes in the signs of the first corrected measured values, to the compensation value of the adjacent magnetic field detector, in that by subtraction in correctly signed manner using the newly assigned compensation values second corrected measured values are generated, which are compared with the first corrected measured values, in that with second corrected measured values smaller than the first corrected measured values the steps are repeated using newly assigned compensation values of each adjacent magnetic field detector until the corrected measured values are larger than the measured values obtained in the preceding step, in that the assignment of the compensation values to the smallest corrected measured values obtained constitutes the starting base for further compensation, in that the smallest corrected measured values obtained are tested for the threshold values being exceeded and in that faults are signalled if threshold values are exceeded.

3. Process according to claim 2, characterized in that the measured values corrected by means of the, in each case, highest compensation values and the amount integral are stored with every new assignment of the compensation values, in that the compensation values are then again, in each case, newly assigned to the adjacent magnetic field detectors, in that the stored measured values are corrected using the newly assigned compensation values, in that the measured values obtained before and after the new assignment and corrected by means of the maximum compensation values are compared with one another and in that if the corrected measured values are, owing to the new assignment of the compensation values, reduced, the latter are once again assigned, in each case, to the adjacent magnetic field probes, whereas if the threshold values are not reached the assignment of the compensation values to the magnetic field detectors is retained.

4. Device for non-destructive testing of ferromagnetic bodies for structural faults comprising a magnetising system and static magnetic field detectors (15, 25, 26) arranged vertically to the magnetising direction on or close to the body surface of the body to be tested in each case between magnetic pole shoes (4, 5) of the magnetising system, whereby said magnetic field detectors are, in time division multiplexing manner, selected and read and the measured values thereof are combined with stored compensation values, with a view to carrying out the process according to claim 1 or one of the subsequent claims, characterized in that each magnetic field detector (15, 25, 26) is connected, via a detecting and coding circuit (48) with a first store (49) connected in the manner of a shift register, with a second store (54) and with a subtraction stage (53), the further inputs of which can optionally be connected to the outputs of detecting circuit (48) or second store (54), and in that a threshold value detector (56) is connected downstream of subtraction stage (53), said threshold value detector being capable of adjustment to positive and negative threshold values and connected with a compensation control circuit (57) capable of controlling the shift of stored values in the first store (49), reading of the first and second store (49, 54), connection of the inputs of subtraction stage (53) to the outputs of the detecting circuit or second store (48, 54) and transmission of the comparison result to a downstream evaluation unit.

5. Device according to claim 4, characterized in that output (50) of the first store (49) is fed back to input (51).

6. Device according to claim 4 or 5, characterized in that the stores (49, 54) are designed for random access.

7. Device according to one of claims 4 to 6, characterized in that it is possible to control, by means of control circuit (57), a shift of the contents of adjacent storage cells of the first store (49) in two directions, as required.

8. Device according to one of claims 4 to 7, characterized in that subtraction stage (53), threshold value detector (56) and compensation control circuit (57) are provided by a microprocessor.

Fig:1

Fig: 2

Fig: 3

Fig. 4

Fig. 6

Fig.5

Fig.7a

Fig.7b

Fig.7c